# NEUE EUROPÄISCHE PATENTSCHRIFT

(11) **EP 0 456 170 B2**
(45) Veröffentlichungstag und Bekanntmachung des Hinweises auf die Entscheidung über den Einspruch: **07.04.2004**
(45) Hinweis auf die Patenterteilung: 04.10.1995
(21) Anmeldenummer: 91107349.2
(22) Anmeldetag: 07.05.1991
(51) Int. Cl.: H02K 17/30, H02K 11/00

(54) **Elektromotor**
Electric motor
Moteur électrique

(30) Priorität: 10.05.1990 DE 4014918
(43) Veröffentlichungstag der Anmeldung: 13.11.1991
(73) Patentinhaber: GRUNDFOS INTERNATIONAL A/S, DK-8850 Bjerringbro (DK)
(72) Erfinder: Jensen, Niels Due, DK-8850 Bjerringbro (DK); Blad, Thomas, Dipl.-Ing., DK-8850 Bjerringbro (DK); Pedersen, Bjarne Dissing, DK-8450 Hammel (DK)
(74) Vertreter: Vollmann, Heiko, Dipl.-Ing.

(56) Entgegenhaltungen:
- BE-A- 701 334
- DE-A- 3 443 024
- DE-A- 3 609 380
- DE-A- 3 740 767
- FR-A- 1 542 210
- FR-A- 2 512 601
- GB-A- 2 199 081
- GB-A- 2 199 203
- JP-U- 62 172 254
- US-A- 3 895 276
- US-A- 4 581 695
- PATENT ABSTRACTS OF JAPAN vol. 7, no. 222 (E-201)(1367) 04 Oktober 1983, & JP-A-58 112448
- Hauptkatalog 1988 der Firma Buerklin, Muenchen, Seiten B21, B23, B27 und K105

## Beschreibung

Die Erfindung betrifft eine Anordnung gemäß den im Oberbegriff des Anspruchs 1 angegebenen Merkmalen.

Elektromotoren werden auf zahlreichen technischen Gebieten zum Antrieb von Arbeitsmaschinen, beispielsweise von Pumpen für Flüssigkeiten oder Gase, eingesetzt. Unterschiedliche Einsatzbedingungen erfordern regelmäßig auch unterschiedliche Motorkenndaten, zum Beispiel hinsichtlich Leistung, Baugröße und Drehzahl. So ist es beispielsweise zum Antrieb von Kreiselpumpen wegen der kreiselpumpenspezifischen physikalischen Gegebenheiten erstrebenswert, die Motordrehzahl möglichst hoch zu wählen, um bei kleinen Maschinenabmessungen große Förderdrücke und Förderströme zu erhalten. Zur Steuerung der Drehzahl bei vorgegebener Netzfrequenz ist es bekannt, dem Elektromotor einen statischen Frequenzumrichter vorzuschalten, was bei Elektromotoren häufig Anwendung findet. Hiermit läßt sich der Motor verlustarm an die jeweiligen Einsatzerfordernisse des anzutreibenden Aggregats in der Anlage anpassen.

Durch die Entwicklungen auf dem Gebiet der Elektronik wurde es bald möglich, Frequenzumrichter durch den Einsatz hochintegrierter Schaltkreise so zu miniaturisieren, daß sie an den Motor bzw. das von diesem getriebene Aggregat mit angebaut bzw. als bauliche Einheit mit dem Motor konzipiert werden konnten. Eine solche gemeinsame Anordnung von Motor und Frequenzumrichter ist beispielsweise aus der DE-A-36 42 724 bekannt. Es ist aus dieser Druckschrift weiterhin bekannt, den Leistungsteil des Frequenzumrichters modulartig auszubilden und über ein Anschlußkabel mit der übrigen im Klemmenkasten der Motorbaueinheit angeordneten Elektronik zu verbinden. Der modulartig ausgebildete Leistungsteil ist zur Anbringung an einer Stirnseite des Motors vorgesehen.

Derartige Anordnungen, bei denen Frequenzumrichter und Motor baulich miteinander verbunden sind, haben bekanntermaßen zahlreiche Vorteile, insbesondere im Hinblick auf die Fertigungstechnik und die damit verbundenen Herstellungskosten. Probleme bereitet jedoch häufig die Kühlung des Frequenzumrichters, da die erforderliche Kühlfläche, die in der Regel durch das Frequenzumrichter- bzw. das Motorgehäuse gebildet wird, in erheblichem Maße abhängig von der zur Verfügung stehenden Wärmesenke ist. So genügt beispielsweise bei Flüssigkeitskühlung eine verhältnismäßig kleine Kühlfläche, während bei Luftkühlung eine erheblich größere, in der Regel um mindestens eine Zehnerpotenz größere Kühlfläche erforderlich ist. Dies führt in der Praxis dazu, daß bei gleichen Motordaten unterschiedliche Bauformen erforderlich sind, um die erforderliche Kühlung des Frequenzumrichters zu gewährleisten. Eine solche Modellvielfalt ist angefangen von der Fertigung bis hin zur Lagerhaltung verhältnismäßig aufwendig und somit kostenintensiv.

Zwar ist es schon bekannt, den miniaturisierten Frequenzumrichter in seiner Gesamtheit oder auch in Teilen als Modul bzw. gesondertes Bauteil auszubilden (DE-A-36 42 724, DE-A-37 40 767, GB-A-21 99 081 und US-A-3,895,276), doch ist bei all diesen Lösungen der Frequenzumrichter an den vorgesehenen Einsatz des Motors angepaßt. Soll der Motor jedoch einem anderen Einsatzzweck zugeführt werden, so wird es häufig erforderlich sein, sowohl den Motor als auch das dem Motor angeßaßte Frequenzumrichtermodul konstruktiv zu verändern, um zum Beispiel eine zuverlässige Kühlung des Frequenzumrichters zu gewährleisten.

Ausgehend von einem Stand der Technik wie er in DE-A-36 42 724 beschrie ben ist, liegt der Erfindung die Aufgabe zugrunde, eine gattungsgemäße Anordnung so auszubilden, daß der Motor unabhängig von der zur Verfügung stehenden Wärmesenke einsetzbar ist und auf einfache und kostengünstige Art an die jeweilige Wärmesenke angepaßt werden kann.

Diese Aufgabe wird gemäß der Erfindung durch die im Anspruch 1 angegebenen Merkmale gelöst. Das Modul, welches den Leistungsteil und die gegebenenfalls nicht zur Motorbaueinheit gehörenden Teile des Frequenzumrichters umfaßt, ist aus einer Anzahl von sich in der Größe und Form der Kühlfläche unterscheidenden Modulen auswählbar, deren Kühlflächen zurAbfuhrder im Leistungsteil entstehenden Verlustwärme an unterschiedliche Kühlmedien und -temperaturen angepaßt sind.

Durch diese erfindungsgemäße Ausgestaltung ist es nun nicht mehr erforderlich, die Motorbaueinheit zum Zwecke der Kühlung des Frequenzumrichterleistungsteils an die jeweils zurVerfügung stehende Wärmesenke anzupassen, sondern es ist lediglich das geeignete Modul auszuwählen. Statt einer solchen Anpassung ermöglicht es die Erfindung, auch andere Wärmesenken als bisher zu nutzen, die in räumlicher Umgebung zur Verfügung stehen oder auch an geeigneter anderer Stelle, wobei dann das Modul stets über ein geeignetes externes Anschlußkabel mit der Motorbaueinheit verbunden wird. Es versteht sich, daß durch die erfindungsgemäße Ausbildung die im Hinblick auf die Kühlung des Frequenzumrichterleistungsteils bisher erforderliche Modellvielfalt der Motorbaueinheit auf ein Minimum reduziert werden kann, wobei nicht nur die Baukosten erheblich vermindert werden, sondern auch das Einsatzspektrum vergrößert wird. Weiterhin können im Modul auch, soweit dies aus welchen Gründen auch immer zweckmäßig ist, Teile der übrigen Frequenzumrichterelektronik, z. B. der Steuerkreis, integriert sein.

Vorteilhafte weitere Ausgestaltungen der Erfindungen sind durch die Merkmale der Unteransprüche gekennzeichnet, sie ergeben sich auch aus dem weiter unten anhand der Zeichnung beschriebenenAusführungsbeispiel.

Zweckmäßigerweise ist das Leistungsteilmodul so ausgebildet, daß sein Gehäuse nach außen hin hermetisch und druckdicht abgeschlossen ist, so daß der Einsatz dieses Moduls weitgehend unabhängig von örtlichen Gegebenheiten, wie beispielsweise staubhaltige Atmosphäre, Witterungseinflüsse und dergleichen, ist. Insbesondere dann, wenn das Modul flüssigkeitsgekühlt werden soll, ist eine solche Ausbildung erforderlich.

Um die Motorbaueinheit schnell und einfach mit dem jeweils den Einsatzbedingungen angepaßten Modul verbinden zu können, ist es zweckmäßig, eine lösbare Verbindung zwischen dem Modul und der Motorbaueinheit vorzusehen, so daß die jeweils einander zuzuordnenden Baueinheiten in einfacher Weise, beispielsweise durch eine Steckverbindung, leitungsverbunden werden können, ohne daß hierzu besondere Fachkenntnisse erforderlich sind. Von Vorteil ist es, wenn eine solche Steckverbindung sowohl motorseitig als auch modulseitig vorgesehen ist, da dann lediglich das Anschlußkabel an die räumliche Anordnung der beiden Baueinheiten anzupassen ist. Es können dann auch Anschlußkabel in bestimmten Längen vorkonfektioniert werden, so daß nur in Ausnahme - fällen eine individuelle Anpassung des Kabels erforderlich ist.

Um auch die Modellvielfalt der für die jeweiligen Einsatzzwecke erforderlichen unterschiedlichen Module auf ein Minimum zu begrenzen, ist es zweckmäßig, das Modul so auszubilden, daß seine wirksame Kühlfläche ohne bauliche Veränderung des Moduls, zum Beispiel durch Aufstecken eines Kühlkörpers veränderbar ist. Dies kann beispielsweise durch den Einsaz eines zylindrischen Gehäuses gewährleistet werden, auf das Kühlkörper wärmeleitend aufschiebbar sind oder vorzugsweise auch schrumpfbar sind. Eine solche Schrumpfverbindung ist für derartige Zwecke von großem Vorteil, da die Flächenpressung zwischen Kühlkörper und Gehäuse mit wachsender Temperaturdifferenz zunimmt, wodurch auch die Wärmeleitung zwischen diesen beiden Bauteilen erhöht wird.

Um einen guten Wärmeübergang zwischen der Leistungsteilelektronik und dem Modulgehäuse sicherzustellen ist es günstig, wenn das Chassis, an oder auf dem die Leistungselektronik angeordnet ist aus einem gut wärmeleitfähigen Material, beispielsweise Kupfer aufgebaut ist, und dieses Chassis kraftschlüssig am Modulgehäuse anliegt. Auch im Hinblick auf die elektrische Sicherheit ist eine solche Ausbildung von Vorteil, da sowohl Chassis als auch Gehäuse gemeinsam geerdet werden können.

Um eine möglichst gute Wärmeleitung zwischen der Leistungselektronik einerseits und dem Modulgehäuse andererseits zu erreichen, ist es von Vorteil, wenn das Modulgehäuse mit einer Wärmeleitpaste oder eine Wärmeleitflüssigkeit verfüllt ist, welche die Leistungselektronik allseits umgibt und die dort entstehende Verlustwärme über das Gehäuse ableitet.

Zweckmäßigerweise weist das Modulgehäuse an seiner Außenseite ein Gewinde auf, so daß es schnell und einfach, beispielsweise in einer mit Gewinde versehenen Bohrung eines Leitungsrohres oder einer Wandung befestigt werden kann.

Wie bereits erwähnt, ist das Modulgehäuse entsprechend der zur Verfügung stehenden Wärmesenke anzupassen. Bei einem Modulgehäuse in Form einer Rohrhülse, deren Außendurchmesser zwischen 6 und 30 mm beträgt, werden derzeit folgende Oberflächenverhältnisse als zweckmäßig angegeben (die angegebenen Zahlen betreffen das Verhältnis von der äußeren Gehäuseoberfläche, wie sie beispielsweise durch Kühlrippen gebildet ist, zu der inneren Oberfläche des Gehäuses):
1. Bei der Kühlung durch freie Konvektion ist ein Oberflächenverhältnis von 8 bis 30 zweckmäßig.
2. Bei der Zwangskühlung durch eine Gasströmung ist ein Oberflächenverhältnis zwischen 3 und 10 günstig.
3. Bei der Kühlung durch einen Flüssigkeitsstrom liegt das Oberflächenverhältnis der Hülse etwas über 1.

Die Erfindung ist nachfolgend anhand eines in den Figuren dargestellten Ausführungsbeispieles näher erläutert. Es zeigen:
- Figur 1: in schematischer Darstellung einen Längsschnitt durch eine elektromotorisch angetriebene Kreiselpumpe,
- Figur 2: einen Schnitt längs der Linie A-A in Figur 1 in vergrößerter Darstellung (Querschnitt durch das Modul),
- Figur 3: einen Längsschnitt durch ein Modul, das mittels eines Gasstromes zwangsgekühlt wird und
- Figur 4: einen Längsschnitt durch ein Modul mit aufgeschrumpften Kühlkörper zur Konvektionskühlung.

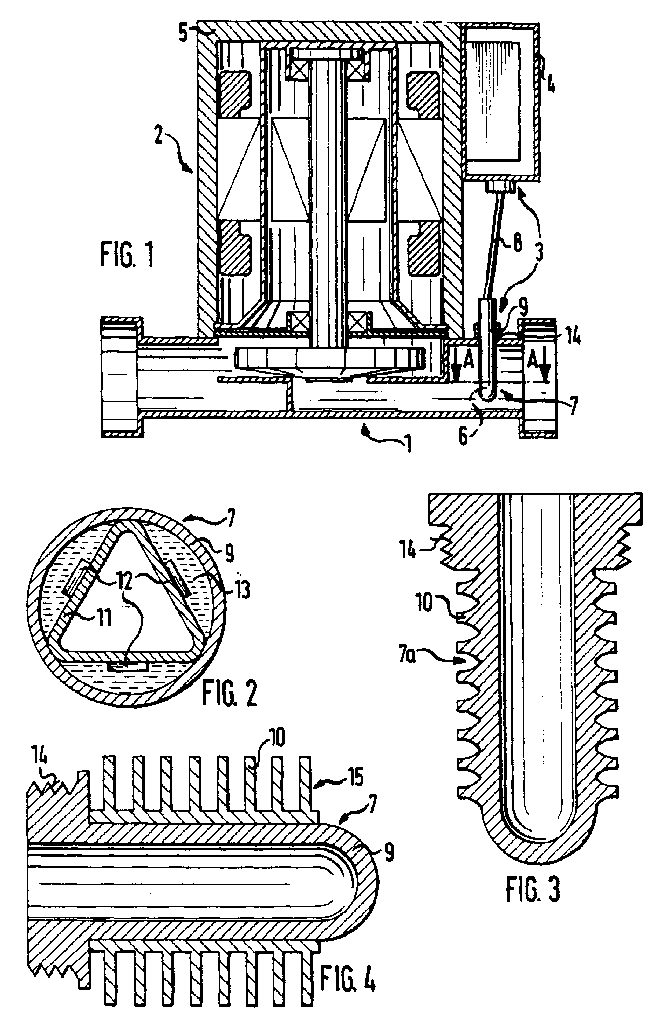

Figur 1 zeigt eine Kreiselpumpe 1, wie sie beispielsweise in Heizungsanlagen als Umwälzpumpe eingesetzt wird. Die Kreiselpumpe 1 wird von einem Elektromotor 2 angetrieben, der von einem Frequenzumrichter 3 gespeist wird. Der Frequenzumrichter 3 besteht in an sich bekannter Weise aus einem Eingangskreis, einem Zwischenkreis, einem Steuerkreis sowie einem Leistungskreis. Während Eingangskreis, Zwischenkreis und Steuerkreis im Klemmenkasten 4 des Elektromotors 2 und somit innerhalb des Gehäuses 5 des Elektromotors 2 angeordnet sind und eine bauliche Einheit mit dem Elektromotor 2 bilden, ist der Leistungskreis als Leistungsteil 6 in einem gesonderten Modul 7 angeordnet. Gegebenenfalls kann auch der Steuerkreis statt im Klemmenkasten zusammen mit dem Leistungskreis im Modul angeordnet sein. Dieses Modul 7 ist über ein Anschlußkabel 8 mit der übrigen Elektronik des Frequenzumrichters 3 im Klemmenkasten 4 verbunden.

Der Leistungsteil 6 ist in einem hohlzylindrischen Gehäuse 9 untergebracht, das hermetisch und druckdicht nach außen hin abgeschlossen ist. Wie aus Figur 1 ersichtlich ist,ragt das Gehäuse 9 des Moduls 7 in Die Förderleitung der Pumpe 1, sodaß dieses im Betrieb von dem zu fördernden Medium umströmt und dadurch gekühlt wird. Die innerhalb des Leistungsteils 6 entstehende Verlustwärme wird durch das Fördermedium - bei einer Heizungsanlage ist dies Wasser - intensiv gekühlt. Da der Wärmeübergang zwischen dem Gehäuse 9 und dem flüssigen Fördermedium recht hoch ist, kann bei der in Figur 1 dargestellten Ausführung auf eine Berippung des Gehäuses 9 verzichtet werden. Ein weiterer Vorteil dieser Anordnung ist, daß die Abwärme des Leistungsteils 6 durch das Fördermedium abgeführt wird und somit als Heizleistung nutzbar ist.

Das externe Anschlußkabel 8 ist sowohl modulseitig als auch motorseitig über eine Steckverbindung angeschlossen, so daß die elektrische Verbindung zwischen dem Leistungsteil 6 und der übrigen Elektronik des Frequenzumrichters 3 problemlos anschließbar ist.

An Stelle des in Figur 1 dargestellten, flüssigkeitsgekühlten Moduls 7 kann beispielsweise dann, wenn der Leistungsteil 6 luftgekühlt werden soll, das in Figur 3 dargestellte Modul 7a eingesetzt werden, das an seiner Außenseite mit Kühlrippen 10 versehen ist. An Stelle des Modulaustausches kann jedoch auch das in Figur 1 dargestellte Leistungsteilmodul 7 durch Aufsetzen eines entsprechenden im Querschnitt ringförmigen Kühlkörpers 15 in seiner Kühlfläche entsprechend vergrößert werden, wie dies in Figur 4 dargestellt ist. Vorteilhaft wird ein solcher Körper auf das Gehäuse 9 aufgeschrumpft.

Figur 2 zeigt den inneren Aufbau des Moduls 7. Innerhalb des zylindrischen Gehäuses 9 ist ein aus Kupfer oder aus einem vergleichbaren gut wärmeleitenden Werkstoff aufgebautes Chassis 11 vorgesehen, das im Querschnitt hier eine etwa dreieckige Außenkontur mit entsprechend dem Innen-Innenradius des Gehäuses 9 abgerundeten Ecken aufweist. An diesem Chassis 11 ist die in Figur2 mit 12 bezeichnete Leistungselektronik wärmeleitend angeordnet. Das Chassis 11 liegt mit seinem an den Radius des Gehäuses 9 angepaßten Ecken kraftschlüssig und somit wärmeleitend an dem Gehäuse 9 an. Der Raum zwischen dem Chassis 11, der Leistungselektronik 12 und dem Gehäuse 9 ist mit einem Wärmeleitmedium, beispielsweise einer Wärmeleitpaste 13 ausgefüllt um den Wärmeübergang zwischen der Leistungselektronik 12 und dem Gehäuse 9 zu vergrößern.

Das Gehäuse 9 ist an seiner Außenseite mit einem Gewinde 14 versehen, mit dem es innerhalb einer Gewinebohrung in der Förderleitung befestigt ist.

## Patentansprüche

1. Anordnung mit einem Elektromotor (2) mit vorgeschaltetem Frequenzumrichter (3) zur Drehzahlsteuerung, bei dem der Frequenzumrichter (3) aus einem Leistungsteil (6) und der übrigen Elektronik (Eingangskreis, Zwischenkreis und Steuerkreis) besteht, bei dem zumindest Teile der übrigen Elektronik eine bauliche Einheit mit dem Motor (2) bilden, und bei dem der Leistungsteil (6) und die gegebenenfalls nicht zur Motorbaueinheit (2) gehörenden Teile des Frequenzumrichters (3) als gesondertes Modul (7) ausgebildet sind, das über ein externes Anschlußkabel (8) mit der Motorbaueinheit (2) verbunden ist, **dadurch gekennzeichnet, daß** mehrere Module (7) vorhanden sind, die sich in der Größe und Form der Kühlfläche unterscheiden und deren Kühlflächen zur Abfuhr der im Leistungsteil (6) entstehenden Verlustwärme an unterschiedliche Kühlmedien und -temperaturen angepaßt sind, wobei ein Modul (7) ensprechend den Einsatzbedingungen des Motors auswählbar ist.

2. Anordnung nach Anspruch 1, **dadurch gekennzeichnet, daß** das Modul (7) ein hermetisch abgeschlossenes druckdichtes Gehäuse (9) aufweist.

3. Anordnung nach Anspruch 1 oder 2, **dadurch gekennzeichnet, daß** das Anschlußkabel (8) modul- und/oder motorseitig einen Stecker mit Kontakten zur lösbaren Verbindung mit einer entsprechenden Steckeraufnahme am Motor (2) bzw. am Modul (7) aufweist.

4. Anordnung nach einem der Ansprüche 1 bis 3, **dadurch gekennzeichnet, daß** das Modul (7) ein zylindrisches Gehäuse (9) aufweist, auf das oberflächenvergrößernde Kühlkörper (15) wärmeleitend aufschiebbar, vorzugsweise aufschrumpfbar sind.

5. Anordnung nach einem der Ansprüche 1 bis 4, **dadurch gekennzeichnet, daß** die Elektronik (12) des Leistungsteiles (6) in einem Chassis (11) aus gut wärmeleitfähigem Material, vorzugsweise Kupfer, angeordnet ist, das kraftschlüssig am Modulgehäuse (9) anliegt.

6. Anordnung nach einem der Ansprüche 1 bis 5, **dadurch gekennzeichnet, daß** die Elektronik (12) des Leistungsteiles (6) zur wärmeleitenden Verbindung mit dem Modulgehäuse (9) von einer Wärmeleitpaste (13) oder -flüssigkeit umgeben ist.

7. Anordnung nach einem der Ansprüche 1 bis 6, **dadurch gekennzeichnet, daß** das Modulgehäuse (9) ein Außengewinde (14) aufweist.

## Claims

1. An arrangement with an electrical motor (2) with a frequency converter (3) connected in front for controlling the rotational speed, with which the frequency converter (3) consists of a power section (6) and the remaining electronics (input circuit, intermediate circuit and control circuit), with which at least parts of the remaining electronics form a construction unit with the motor (2), and with which the power section (6) and the parts of the frequency converter (3) which as the case may be do not belong to the motor construction unit (2) are designed as a separate module (7) which is connected to the motor construction unit (2) via an external connection cable (8), **characterised in that** several modules are present which differ in size and shape of the cooling surface and whose cooling surfaces for leading away waste heat arising in the power section (6) are adapted to various coolants and cooling temperatures, wherein a module (7) is selectable according to the application conditions of the motor.

2. An arrangement according to claim 1, **characterised in that** the module (7) comprises a hermetically sealed, pressure-tight housing (9).

3. An arrangement according to claim 1 or 2, **characterised in that** the connection cable (8) on the module side or on the motor side comprises a plug with contacts for the releasable connection to a corresponding plug receiver on the motor (2) or on the module (7).

4. An arrangement according to one of the claims 1 to 3, **characterised in that** the module (7) comprises a cylindrical housing (9) onto which surface-area-enlarging cooling bodies (15) may be pushed in a heat-conducting manner, preferably are able to be shrunk on.

5. An arrangement according to one of the claims 1 to 4, **characterised in that** the electronics (12) of the power section (6) are arranged in a frame (11) of good heat-conducting material, preferably copper, which bears on the module of the housing (9) with a non-positive fit.

6. An arrangement according to one of the claims 1 to 5, **characterised in that** the electronics (12) of the power section (6) are surrounded by a heat-conducting paste (13) or heat conducting fluid for the heat-conducting connection to the module housing (9).

7. An arrangement according to one of the claims 1 to 6, **characterised in that** the module housing (9) comprises an external thread (14).

## Revendications

1. Agencement comprenant un moteur électrique (2) avec un convertisseur de fréquence (3) placé en amont pour la commande de la vitesse de rotation, dans lequel le convertisseur de fréquence (3) est constitué par une partie de puissance (6) et l'électronique complémentaire (circuit d'entrée, circuit intermédiaire et circuit de commande), dans lequel au moins des parties de l'électronique complémentaire forment une unité modulaire avec le moteur (2), et dans lequel la partie de puissance (6) et les parties du convertisseur de fréquence (3), qui n'appartiennent éventuellement pas à l'unité modulaire du moteur (2), sont réalisées sous la forme d'un module (7) séparé, qui est relié à l'unité modulaire (2) du moteur par un câble de raccord (8) externe, **caractérisé en ce que** plusieurs modules (7) sont présents, qui se distinguent par l'étendue et la forme de la surface de refroidissement et dont les surfaces de refroidissement sont adaptées à différents agents refroidisseurs et à différentes températures de refroidissement pour évacuer la chaleur dissipée qui est produite dans la partie de puissance (6), un module (7) pouvant être sélectionné en fonction des conditions d'utilisation du moteur.

2. Agencement selon la revendication 1, **caractérisé en ce que** le module (7) présente un boîtier (9) étanche à la pression et hermétiquement clos.

3. Agencement selon la revendication 1 ou 2, **caractérisé en ce que** le câble de raccord (8) présente, du côté module et/ou du côté moteur, une fiche munie de contacts pour la connexion amovible avec un logement de fiche correspondant sur le moteur (2) ou sur le module (7).

4. Agencement selon l'une des revendications 1 à 3, **caractérisé en ce que** le module (7) présente un boîtier (9) cylindrique sur lequel des corps refroidisseurs (15) qui agrandissent la surface peuvent être emmanchés, de préférence à chaud, de manière thermoconductrice.

5. Agencement selon l'une des revendications 1 à 4, **caractérisé en ce que** l'électronique (12) de la partie de puissance (6) est placée dans un châssis (11) qui est un matériau ayant une bonne conductibilité thermique, de préférence du cuivre, et qui est lié par adhérence au boîtier (9) du module.

6. Agencement selon l'une des revendications 1 à 5, **caractérisé en ce que** l'électronique (12) de la partie de puissance (6) est entourée par une pâte thermoconductrice (13) ou un liquide thermoconducteur pour la connexion thermoconductrice au boîtier (9) du module.

7. Agencement selon l'une des revendications 1 à 6, **caractérisé en ce que** le boîtier (9) du module présente un filetage extérieur (14).
